# EUROPEAN PATENT SPECIFICATION

(11) **EP 1 559 586 B1**
(45) Date of publication and mention of the grant of the patent: **01.10.2014**
(21) Application number: 05100508.0
(22) Date of filing: 26.01.2005
(51) Int. Cl.: B60C 1/00, C08L 9/06, C08L 19/00, C08K 5/548

(54) **Tire with component of rubber composition comprised of functionalized styrene/butadiene elastomer, silica and styrene/alpha methylstyrene resin**
Reifen mit einer Komponente enthaltend eine Kautschukzusammensetzung auf Basis eines Styren/Butadien Elastomer, Silica und einer Styrol/Methylstyrolzusammensetzung
Pneumatique comportant un élément ayant une composition caoutchouteuse comprenant un élastomère styrène/butadiène fonctionalisé, de la silice et une résine styrène/alpha méthyle styrène

(30) Priority: 29.01.2004 US 540235
(43) Date of publication of application: 03.08.2005
(73) Proprietor: The Goodyear Tire & Rubber Company, Akron, OH 44316-0001 (US)
(72) Inventor: Zanzig, David John, L-8064, Bertrange (LU); Pagliariini, Olivio, L-6212, Consdorf (LU)
(74) Representative: Kutsch, Bernd

(56) References cited:
- US-A- 5 877 249
- US-A- 6 071 995

## Description

### Field of Invention

The invention relates to a tire having at least one component (e.g. tread) of a rubber composition comprised of a functionalized styrene/butadiene elastomer containing internal silanol and/or siloxy group(s) therein with pendent silanol and/or alkoxy groups of a polymodal (e.g. bimodal) molecular weight distribution and a dispersion therein of a synthetic amorphous silica (e.g. aggregates of precipitated silica) and styrene/alpha methylstyrene resin. In one aspect, said rubber composition may contain at least one additional diene-based elastomer. In another aspect, at least a portion of said synthetic amorphous silica may be in a form of pre-treated precipitated silica aggregates which have been pre-treated to reduce hydroxyl groups on their surface prior to blending with said functionalized styrene/butadiene elastomer.

### Background of the Invention

Tires are historically prepared with treads of a rubber composition which is comprised of various elastomers which are often a combination of cis 1,4-polybutadiene and styrene/butadiene copolymer elastomers, although minor amounts of other elastomers, including, for example, cis 1,4-polyisoprene, isoprene/butadiene and 3,4-polyisoprene, may also be present.

Tire tread rubber compositions conventionally contain particulate reinforcing fillers which are normally carbon black and/or aggregates of a synthetic silica such as a precipitated silica. Such reinforcement fillers for various rubber compositions, including tire treads, are well known to those having skill in such art.

Historically, US-A- 5,877,249 relates to as tire with a tread of a rubber composition composed of a diene-based elastomer, such as for example a styrene/butadiene elastomer, which is reinforced with carbon black and precipitated silica, in which the carbon black and silica were illustrated as being used in relatively equal amounts with a significant carbon black content of 20 to 60 phr, together with a styrene/alpha methylstyrene resin.

Sometimes, various functionalized elastomers are taught for use with precipitated silicas. For example, in US-A- 6,013,718, it was proposed to provide a rubber composition including a functionalized diene polymer and silica in which the functionalized diene polymer bears a chain end as a silanol functional group or a polysiloxane block which has a silanol end. For an additional example, in US-A- 6,071,995 it was proposed to use a carbon black having silica fixed to its surface is suggested for use with a functionalized diene polymer.

In the description of the invention, the term "phr" relates to parts by weight of a particular ingredient per 100 parts by weight of rubber contained in a rubber composition. The terms "rubber" and "elastomer" are used interchangeably unless otherwise indicated, and the terms "cure" and vulcanize" may be used interchangeably unless otherwise indicated.

### Summary of the Invention

In accordance with this invention, a tire is provided having at least one component of a rubber composition comprised of, based upon 100 parts by weight of elastomer (phr),
(A) 100 phr of elastomers comprised of:
   (1) 60 to 90 phr of a styrene/butadiene elastomer composite (SBR Composite), wherein said SBR Composite is comprised of a styrene/butadiene copolymer elastomer (SBR-1) and a functional styrene/butadiene copolymer elastomer (SBR-2) which contains at least silicon atom within said elastomer with associated pendent hydroxyl and/or alkoxy groups from said silicon atom, as a part of the (SBR-2) elastomer chain to thereby divide said elastomer into at least two segments thereof (SBR-2A and SBR-2B) with the silicon atom of said silanol and/or siloxy group therebetween, wherein said SBR composite is thereby comprised of a polymodal (e.g. primarily bimodal) molecular weight configuration comprised 35 to 55 weight percent thereof of said (SBR-1) having a number average molecular weight (Mn) in a range of 200,000 to 300,000 and, correspondingly, 65 to 35 weight percent thereof of said (SBR-2) having a number average molecular weight (Mn) in a range of 400,000 to 550,000; wherein said elastomer contains from zero to a maximum of ten weight percent of at least one additional styrene/butadiene copolymer elastomer (SBR-3) pendent to said silicon atom and having an number average molecular weight (Mn) of greater than 550,000, alternatively between 550,000 and 650,000; and having a styrene contend and Tg value in said range for said SBR-1 and SBR-2;
   (2) 10 to 40 phr of at least one additional diene-based elastomer, preferably cis 1,4-polybutadiene elastomer; and
(B) 35 to 100, alternately 50 to 100, phr of particulate reinforcement comprised of:
   (1) 45 to 100, alternately 81 to 95, and preferably at least 85, phr of aggregates of synthetic amorphous silica, preferably precipitated silica, which contains hydroxyl groups on its surface (e.g. silanol groups), preferably precipitated silica, and
   (2) from zero to 15, alternately 5 to 12, and alternately from zero to a maximum of 15, phr of rubber reinforcing carbon black characterized by having an Iodine absorption value (ASTM D-1510) in a range of from 140 to 180 g/kg together with a dibutylphthalate (DBP) adsorption value (ASTM D-2414) in a range of from 120 to 140 cc/100g,
   wherein the silica/carbon black weight ratio is preferably at least 5.67/1 and more preferably at least 8.5/1, and
(C) 5 to 12 phr of a styrene/alpha methylstyrene copolymer resin composed of 40 to 70 percent units derived from styrene and, correspondingly, 60 to 30 percent units derived from alpha methylstyrene, and
(D) a coupling agent as:
   (1) a coupling agent:
      (a) having a moiety reactive with said hydroxyl groups contained on the surface of said silica aggregates and said silanol and/or siloxy groups of said (SBR-2) elastomer, and;
      (b) another moiety interactive with said additional diene-based elastomer and said (SBR-1) and (SBR-2) of said (SBR) composite, or
   (2) combination of a bis-(3-triethoxysilylpropyl) polysulfide having an average of from 2 to 2.5 connecting sulfur atoms in its polysulfidic bridge and a bis-(3-triethoxysilylpropyl) polysulfide having an average of from 3 to 4 connecting sulfur atoms in its polysulfidic bridge,
   wherein said polysulfide having an average of from 2 to 2.5 connecting sulfur atoms in its polysulfidic bridge (to the exclusion of such polysulfide having an average of from 3 to 4 connecting sulfur atoms in its polysulfidic bridge) is blended with said rubber composition in the absence of sulfur and sulfur vulcanization accelerator and wherein said polysulfide having an average of from 3 to 4 connecting sulfur atoms in its polysulfidic bridge is thereafter blended with said rubber composition in the presence of sulfur and at least one sulfur vulcanization accelerator, and
(E) optionally, 1 to 10 phr of a starch/plasticizer composite comprised of starch and plasticizer therefor of a weight ratio in a range of 0.5/1 to 5/1, wherein said starch/plasticizer has a softening point in a range of 110°C to 170°C.

In practice, the elastomers of said SBR composite, (SBR-1) and (SBR-2), may have a weight average molecular weight to number average molecular weight ratio (Mw/Mn) of not more than 2 and preferably in a range of 1.01 to 1.15,

In one aspect of the invention, said (SBR-2) functionalized styrene/butadiene elastomer may of the general Formula (I): 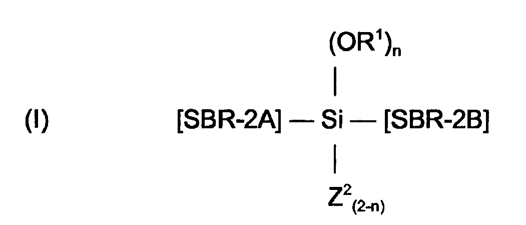 wherein said [SBR-2A] and [SBR-2B] are individual elastomer segments each having a bound styrene content in a range of from 25 to 35 percent, a vinyl 1,2-content in a range of 50 to 70 percent based on the butadiene component of the respective styrene/butadiene (SBR-2) copolymer, a Tg in a range of -15°C to -30°C; wherein the silicon (Si) atom is attached to a butadiene moiety of the respective (SBR-2A) and (SBR-2B); R¹ is selected from selected from hydrogen, methyl, ethyl, propyl, butyl and phenyl groups, preferably from hydrogen (thereby forming a pendent silanol group) or as a methyl or ethyl group (and therefore forming a pendent alkoxy group); and Z² is selected from an additional SBR segment of said styrene content and said Tg, an alkyl radical containing from 1 to 18 carbon atoms, or an aromatic radical containing from 6 to 12 carbon atoms, preferably from said alkyl radials and said aromatic radicals thereby yielding a substantially linear silicon coupled elastomer; and where n is a value in a range of from zero to 2, alternately from 1 to 2, preferably 2.

Accordingly, in one aspect of the invention, it is considered herein that said Formula (I) may be represented as a substantially linear silicon coupled elastomer (SBR-2) as Formula (IA) or (IB): 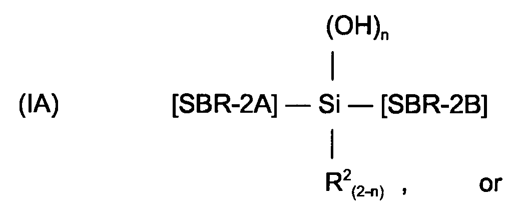 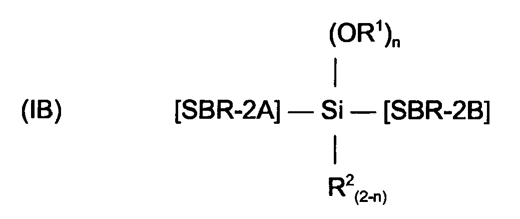 wherein R¹ is selected from methyl, ethyl, propyl, butyl, and phenyl radicals, preferably an ethyl radical, and n is a value in a range of from 0 to 2.

Representative examples of R² radicals are radicals selected from, for example, isopropyl, t-butyl, phenyl and tolyl radicals.

In practice, it is preferred that said (SBR-2A) and SBR-2B) are substantially equal in their individual physical characteristics.

Representative examples of such high structure carbon black reinforcement may be found, for example, in The Vanderbilt Rubber Handbook, 13th Edition, (1990), Pages 416 and 417. Representative of such carbon black reinforcement, according to ASTM designations are, for example, N220, N234, N299, N115, N110 and N134, although the N134 carbon black itself is not recited in The Vanderbilt Rubber Handbook reference which reportedly has an Iodine absorption value of 142 g/kg and a DBP adsorption value of 130 cc/100g.

Said styrene/alpha methylstyrene resin is an important aspect of this invention. In practice, the resin may have a glass transition temperature (Tg) in a range of from 30°C to 80°C. It may have a softening point (ASTM E-28) within a range of from 75°C to 110°C, alternately from 80°C to 90°C.

The resin may have a molecular weight distribution, namely a ratio of its weight average molecular weight (Mw) to number average molecular weight (Mn), or (Mw/Mn) in a range of 1.5/1 to 2.5/1 which is considered herein as being a relatively narrow range. This is believed herein to be advantageous because it has been observed to promote compatibility with the SBR Composite/polybutadiene rubber matrix to thereby increase the composition's hysteresis over a wider temperature range which is considered herein as being important for promoting wet and dry traction for a tire tread over a wider range of conditions.

Such resin is considered herein to be a relatively short chain copolymer of styrene and alpha methylstyrene with a styrene/alpha methylstyrene molar ratio desirably being in a range of from 0.4/1 to 1.5/1. In one aspect, such resin may suitably be prepared, for example, by cationic copolymerization of styrene and alphamethyl styrene in a hydrocarbon solvent.

A significant aspect of this invention is the inclusion of a combination of the styrene/alpha methylstyrene resin together with the aforesaid functionalized styrene/butadiene elastomer. This is considered herein to be significant because it has been observed to promote an increase in hysteresis at low temperature (e.g. 0°C) which is indicative of increased wet traction for a tire with a tread of such combination.

A further significant aspect of this invention is the use of a high structure carbon black having the aforesaid lodine and DBP values. This is considered herein to be significant, particularly when used in combination with the aforesaid styrene/alpha methyl styrene resin, because it has been observed to promote an increase in moduli which is indicative of enhanced tire cornering ability for a tire with a tread which contains such combination and because it has been observed to promote resistance to abrasion which is indicative of increased wear resistance for a tire tread which contains such combination. Therefore, use of the high structure carbon black reinforcement is considered herein to be an important part of this invention to promote both the durability of the tread rubber composition and cornering ability of the tire under extreme vehicle maneuvering conditions.

Another significant aspect of the invention is the optional inclusion of said starch/plasticizer composite and/or said combination of said bis-(3-ethoxysilylpropyl) polysulfide coupling agents.

In one aspect of the invention, the rubber composition includes the functionalized styrene/butadiene elastomer (SBR-2) and the bimodal weight distribution characteristic of the (SBR-1) and (SBR-2) with said silicon atom of said functionalized (SBR-2 ) having a pendent hydroxyl or alkoxy group thereon.

A representative example of said (SBR) composite of styrene/butadiene copolymer rubber (SBR-1) and silicon coupled, silanol and /or siloxane containing, styrene/butadiene elastomer (SBR-2) is considered herein to be T596™ from the Japan Synthetic Rubber Company (JSR).

In one aspect of the invention, it may be desirable for said rubber composition to be comprised of at least one of said starch/plasticizer composite and said combination of bis-(3-triethoxysilylpropyl) polysulfide coupling agents.

In one aspect of the invention said coupling agent may be an organosulfur silane of the general formula (II):

(II) (R⁴O)₃―Si―R⁵―Sₓ―R⁵―Si―(R⁴O)₃

wherein R⁴ is an alkyl radical selected from at least one of methyl and ethyl radicals, preferably an ethyl radical, R⁵ is an alkylene radical having from 1 to 18 carbon atoms, preferably from 2 through 4 carbon atoms, and x is a value in a range of 2 to 8, with an average of from 2 to 2.6 or from 3.5 to 4, preferably from 2 to 2.6;

In one aspect of the invention, the precipitated silica may be, prior to blending with said elastomer(s):
(A) pre-treated with an with an alkylsilane of the general Formula (III) prior to blending with said elastomer(s) and said coupling agent;
(B) pre-treated with said coupling agent of formula (II);
(C) pre-treated with an organomercaptosilane of formula (IV), or
(D) pre-treated with a combination of said alkylsilane of Formula (III) with
   (1) said coupling agent of the general Formula (II) and/or
   (2) said organomercaptosilane of Formula (IV), wherein said alkylsilane of the general Formula (III) is represented as:

      (III) Xₙ―Si―R⁶₄₋ₙ

      wherein R⁶ is an alkyl radical having from 1 to 18 carbon atoms, preferably from 1 through 4 carbon atoms; n is a value of from 1 through 3; X is a radical selected from the group consisting of halogens, preferably chlorine, and alkoxy radicals selected from methoxy and ethoxy radicals, and
      wherein said organomercaptosilane of the general Formula (IV) is represented as:

      (IV) (X)ₙ(R⁷O)₃₋ₙ―Si ―R⁸- SH

      wherein X is a radical selected from a halogen, namely chlorine or bromine and preferably a chlorine radical, and from alkyl radicals having from one to 16, preferably from one through 4, carbon atoms, preferably selected from methyl, ethyl, n-propyl and n-butyl radicals; wherein R⁷ is an alkyl radical having from one through 4 carbon atoms preferably selected from methyl and ethyl radicals and more preferably an ethyl radical; wherein R⁸ is an alkylene radical having from one to 16, preferably from one through 4, carbon atoms, preferably a propylene radical; and n is an average value of from zero through 3, preferably zero.

A significant consideration for said pre-treatment of said silica is to reduce, or eliminate, evolution of alcohol in situ within the rubber composition during the mixing of the silica with said elastomer such as may be caused, for example, by reaction of a coupling agent of Formula (II) contained within the elastomer composition with hydroxy groups (e.g. silanol groups) contained on the surface of the silica.

Therefore it is considered, in accordance with this aspect of this invention, that a tire is thereby comprised of a component (e.g. a tire tread) of a rubber composition exclusive of any appreciable content of in situ formed alcohol.

A significant consideration of use of the said functionalized diene-based elastomer of formula (I) as tire tread rubber composition, particularly where said precipitated silica is pre-treated with said organosulfursilane of formula (II) and/or said with said alkylsilane of formula (III), is a reduction, or eliminating, of evolution of alcohol during the mixing of the precipitated silica with said coupling agent (formula II) with the diene-based elastomer and functionalized elastomer insofar as the coupling agent is concerned which may be a consideration where it is desired that an alcohol is not released when mixing the respective ingredients with the respective elastomers, such as for example where it might be desired that alcohol is not thereby released into the atmosphere in a rubber product manufacturing facility such as, for example, a tire manufacturing plant. Thus the alcohol byproduct may be limited to and contained at a silica manufacturing, or a silica treatment, facility exclusive of the mixing thereof with a rubber composition and thereby exclusive of a rubber product manufacturing facility.

Representative alkylsilanes of formula (III) for use in the practice of this invention are, for example, trichloromethylsilane, dichlorodimethylsilane, chlorotrimethylsilane, trimethoxymethylsilane, dimethoxydimethylsilane, methoxytrimethylsilane, trimethoxypropylsilane, trimethoxyoctylsilane, trimethoxyhexadecylsilane, dimethoxydipropylsilane, triethoxymethylsilane and diethoxydimethylsilane. Preferable organosilanes are dichlorodimethylsilane, chlorotrimethylsilane and hexamethyldisilazane.

Representative of organomercaptosilanes of formula (IV) for use in the practice of this invention are, for example organomercaptosilanes as, for example, mercaptomethyltrimethoxysilane, mercaptoethyltrimethoxysilane, mercaptopropyltrimethoxysilane, mercaptomethyltriethoxysilane, mercaptoethyltripropoxysilane and mercaptopropyltriethoxysilane. Preferable organomercaptosilanes of formula (IV) are mercaptopropyltriethoxysilane and mercaptopropyltrimethoxysilane.

Representative of organosulfursilanes of formula (II) are, for example, bis (3-alkoxysilylalkyl) polysulfides having from 2 to 6, with an average of 2 to 2.6 or from 3.5 to 4 connecting sulfur atoms in its polysulfidic bridge. For example, such materials might be selected from at least one of a bis-(3-triethoxysilylpropyl) disulfide material with an average of from 2 to 2.6 connecting sulfur atoms in its polysulfidic bridge, and a bis(3-triethoxysilylpropyl) tetrasulfide material with an average of from 3.5 to 4 connecting sulfur atoms in its polysulfidic bridge.

In one aspect of the invention, as hereinbefore discussed, the precipitated silica may be treated with both an alkylsilane, as a hydrophobating agent, represented by formula (III) optionally with a coupling agent represented by formula (II) and alternatively with the organomercaptosilane of formula (IV) whether by itself or in combination with said alkylsilane and/or coupling agent.

In practice of the invention, various diene-based elastomers (in addition to said functionalized diene-based elastomer) may be used for tire tread rubber composition.

Such diene based elastomers may be, for example, homopolymers and copolymers of conjugated dienes such as for example isoprene and 1,3-butadiene and copolymers of such dienes with a vinyl aromatic compound such as styrene or alphamethyl styrene, preferably styrene.

Representative of such additional elastomers are, for example, cis 1,4-polyisoprene rubber (natural and synthetic), cis 1,4-polybutadiene rubber, styrene/butadiene copolymer rubber (prepared by aqueous emulsion of organic solvent polymerization), styrene/isoprene/butadiene terpolymer rubber, butadiene/acrylonitrile rubber, 3,4-polyisoprene rubber and isoprene/butadiene copolymer rubber.

In practice, the rubber composition may contain a tin and/or silicon coupled, preferably tin coupled, diene-based elastomer prepared by organic solvent polymerization in the presence of a suitable tin-based catalyst complex of at least one of isoprene and 1,3-butadiene monomers or of styrene together with at least one of isoprene and 1,3-butadiene monomers. Said tin and/or silicon coupled elastomers may be selected from, for example, styrene/butadiene copolymers, isoprene/butadiene copolymers, styrene/isoprene copolymers and styrene/isoprene/butadiene terpolymers. The preparation of tin and silicon coupled elastomers via organic solvent polymerization is well known to those having skill in such art.

In practice, the rubber composition may contain a functionalized diene-based elastomer. For example, a functionalized elastomer may be provided as a diene-based elastomer as described above which contains one or more functional groups such as, for example, one or more hydroxyl groups, carboxyl groups, silanol groups, amine groups and epoxy groups, which are available to participate in reactions with, for example rubber reinforcing fillers such as, for example, carbon black (actually moieties such as for example minor amounts of carboxyl groups on the surface of carbon black), carbon black which contains domains of silica on its surface, amorphous silica, clay (particularly water swellable clay such as for example montmorillonite clay), and starch-based reinforcement. Such functionalized diene-based elastomers, and their preparation, are well known to those having skill in such art.

In practice, a starch/plasticizer composite for use in this invention is a composite of starch and plasticizer therefore. Such starch may be comprised of amylose units and amylopectin units in a ratio of, for example, 10/90 to 35/65, alternatively 20/80 to 30/70, and has a softening point according to ASTM No. D1228 in a range of 180°C to 220°C; and the starch/plasticizer composite itself having a softening point in a range of 110°C to 170°C according to ASTM No. D1228.

In practice, the starch/plasticizer composite may be desired to be used, for example, as a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone.

For the purposes of this invention, the plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

In general, the starch/plasticizer composite has a desired starch to plasticizer weight ratio in a range of 0.5/1 to 4/1, alternatively 1/1 to 2/1, so long as the starch/plasticizer composition has the required softening point range, and preferably, is capable of being a free flowing, dry powder or extruded pellets, before it is mixed with the elastomer(s).

The synthetic plasticizer(s) may be of a viscous nature at room temperature, or at about 23°C and, thus, considered to be a liquid for the purposes of this description, although the plasticizer may actually be in a form of a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can be obtained in powder forms at different molecular weights and crystallinities such as, for example, a molecular weight of about 11700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to US-A-5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an esterification condensation reaction. Such esterification reactions are well known to those skilled in such art.

It is readily understood by those having skill in the art that the rubber composition of the tire component for this invention would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins, in addition to the aforesaid styrene/alpha methylstyrene resin, including tackifying resins, silicas, and plasticizers, fillers, pigments, fatty acid, zinc oxide, waxes, antioxidants and antiozonants, peptizing agents and the high structure reinforcing carbon black.

The present invention is primarily directed to the utilization of the aforesaid functionalized elastomer and specialized aggregates of precipitated silica for a tire tread rubber composition.

The tires can be built, shaped, molded and cured by various methods which will be readily apparent to those having skill in such art.

The invention may be better understood by reference to the following example in which the parts and percentages are by weight unless otherwise indicated.

### EXAMPLE I

Samples of diene rubber-based compositions were prepared.

Sample A is referred to herein as a Comparative Sample A which was composed of a combination of cis 1,4-polybutadiene rubber and emulsion polymerization prepared styrene/butadiene rubber, precipitated silica and silica coupler.

Samples B is referred to herein as Comparative Sample B and was comprised of a blend of cis 1,4-polybutadiene rubber and solvent solution polymerization prepared functionalized styrene/butadiene rubber which contained internal, pendent siloxane groups together with a precipitated silica and silica coupler.

Comparative Sample C was similar to Comparative Sample B except that it contained a styrene/alpha methylstyrene resin which is observed herein to promote wet traction for a tire tread of a rubber composition of Comparative Sample C.

The ingredients were mixed in one non-productive mixing stage (without sulfur and sulfur cure accelerators) in an internal rubber mixer for three minutes to a temperature of 165°C, the resulting batch of rubber composition dumped from the mixer and cooled to below 40°C, followed by mixing the batch in a productive mixing stage (where sulfur and sulfur cure accelerators are added) in an internal rubber mixer for about two minutes to a cooler mixing temperature of 115°C. The preparation of rubber mixtures by sequential mixing in at least one non-productive mixing stage followed by a productive mixing stage, in an internal rubber mixer is, in general, well known to those having skill in such art.

The rubber blends are exemplified in the following Table 1.

**Table 1**

| | Comparative | Comparative | Comparative |
|---|---|---|---|
| Material | Sample A | Sample B | Sample C |
| First Non-Productive Mix Stage 165°C) | | | |
| Emulsion styrene/butadiene rubber¹ | 70 | 0 | 0 |
| Functionalized styrene/butadiene rubber² | 0 | 75 | 75 |
| Cis 1,4-polybutadiene rubber³ | 30 | 25 | 25 |
| Styrene/alpha methylstyrene resin⁴ | 5 | 0 | 6 |
| Processing aids⁵ | 28 | 35.9 | 33.9 |
| High structure carbon black⁶ | 0 | 10 | 10 |
| Precipitated silica⁷ | 86 | 90 | 86 |
| Coupling agent (50 percent active)⁸ | 15.8 | 14.4 | 13.8 |

| Productive Mix Stage (110°C) | | | |
|---|---|---|---|
| Sulfur, rubber maker's grade | 1.4 | 1.8 | 1.9 |
| Accelerators⁹ | 4 | 3.6 | 3.6 |

| | | | |
|---|---|---|---|
| ¹An emulsion polymerization prepared styrene/butadiene copolymer elastomer having a bound styrene content of about 40 percent and a Tg of about -30°C obtained as Se S1721S™ from the Dow Chemical Company, Netherlands. The elastomer was oil extended by containing about 37.5 parts weight rubber processing oil per 100 parts by weight of the elastomer and is reported in Table as its dry weight without the extender oil. ²Functionalized solution polymerization prepared styrene/butadiene copolymer rubber which contains internal pendent siloxy groups in its polymeric chain, is considered herein as being representative by the general Formula (I), has a bound styrene content of about 25 weight percent and has a vinyl content, based upon butadiene derived portion of the rubber of about 47 percent ³Cis 1,4-polybutadiene rubber obtained as Budene™ 1207 from The Goodyear Tire & Rubber Company ⁴Styrene/alpha methyl styrene resin composed of about 60 percent units derived from styrene, having a Tg of 40°C and a softening point of 85°C, having been prepared by cationic polymerization of styrene and alpha methylstyrene, as Resin 2336™ from the Eastman Chemical Company ⁵Aromatic rubber processing oil and microcrystalline and paraffinic waxes ⁶N134 (an ASTM designation) carbon black having an Iodine absorption value of about 142 g/kg and a DBP adsorption value of about 130 cc/100g as Vulcan 10H™ from the Cabot Corporation. ⁷Synthetic, amorphous precipitated silica as Zeosil 1165MPTM from Rhodia ⁸Coupling agent as X266S™ as a bis (3-triethoxysilylpropyl) polysulfide containing from about 2 to about 2.6 sulfur atoms in its polysulfidic bridge as a composite on a carbon carrier in a 50/50 weight ratio from Degussa-Huls and reported in Table 1 as the composite and therefore as being 50 percent active as the coupling agent ⁹Accelerators as a sulfenamide together with diphenyl guanidine | | | |

### EXAMPLE II

The prepared rubber Samples of Example I were cured at a temperature of 160°C for 14 minutes and the various physical properties, cured and uncured, (many of the values are reported as rounded numbers) are shown in the following Table 2.

**Table 2**

| | Samples | | |
|---|---|---|---|
| | Control | Control | Comparative |
| | Sample A | Sample B | Sample C |
| Functionalized SBR (phr) | 0 | 75 | 75 |
| Styrene/alpha methylstyrene resin (phr) | 5 | 0 | 6 |

| MDR Rheometer (150°C) | | | |
|---|---|---|---|
| T90 (minutes)' | 12.6 | 19.6 | 17.1 |

| Stress-Strain. Cure 32 minutes at 150°C | | | |
|---|---|---|---|
| 300% modulus (ring) (MPa) | 8.5 | 9.7 | 9.1 |
| Ultimate tensile strength (MPa) | 18.1 | 16.2 | 16.9 |
| Ultimate elongation (%) | 600 | 485 | 525 |
| Shore A hardness (23°C) | 66 | 67 | 66 |
| Rebound (cold), Zwick (0°C) | 13 | 10 | 9.4 |
| Rebound, Zwick (23°C) | 28 | 26 | 24 |
| Rebound (hot), Zwick (100°C) | 55 | 54 | 55 |

| RPA Data² | | | |
|---|---|---|---|
| Storage modulus, G', 1% strain, 100°C (MPa) | 3.05 | 4.09 | 3.4 |
| Tan delta (100°C) | 0.17 | 0.158 | 0.157 |

The MDR instrument (Moving Die Rheometer) was model MDR-2000 by Alpha Technologies. Such instrument may be used, for example, for determining cure characteristics of elastomeric materials, such as for example, the T90 property.
¹The T90 is the time determined by the MDR analytical instrument to be the time to 90 percent of cure of the rubber sample.
²An RPA (Rubber Process Analyzer) instrument which measures the dynamic strain sweep at a selected temperature (e.g. from 40°C to 100°C) at a selected frequency (e.g. one Hertz or ten Hertz) over a range of, for example, 1 to 50 percent strain, with the one percent strain being referenced in this Example to determine the storage modulus G'. The RPA instrument may also be used to determine the tan delta at a selected temperature (e.g. from 40°C to 100°C). Such a rubber process analyzer is RPA 2000 instrument by Alpha Technologies, formerly the Flexsys Company and formerly the Monsanto Company. References to an RPA-2000 instrument may be found in the following publications: H. A. Palowski, et al, Rubber World, June 1992, and January 1997, as well as Rubber & Plastics News, April 26 and May 10, 1993. Such method of determining the storage modulus G' is believed to be well known by those having skill in such art.

From Table 2 it is seen that Comparative Sample C has the lowest Rebound value at 0°C and 23°C which is indicative of improved wet traction and has the lowest tan delta at 100°C which is indicative improved rolling resistance (less resistance to rolling) for a tire having a tread of such rubber composition.

### EXAMPLE III

Tires of size 205/55R16 were prepared having treads of the rubber compositions identified in Examples I and II as Control Sample A, Control Sample B and Comparative Sample C and correspondingly referenced in the following Table 3 as Control Tire A, Control Tire B and Control Tire C.

The tread rubber compositions were mixed in a large internal (Banbury-type) rubber mixer using a step-wise mixing process composed of four sequential non-productive mixing stages followed by a productive mixing stage. The rubber mixture was mixed in the first three of the non-productive mixing stages to a temperature of about 165°C and the last non-productive mixing stage to a temperature of about 135°C.

The tires were mounted on metal rims and inflated. A resulting tire/rim assembly was mounted on a laboratory resiliometer wheel having a diameter of 170.2 cm (67 inches) to evaluate the respective tires for rolling resistance. Other resulting tire/rim assemblies were mounted on a vehicle for wet handling, dry handling and for braking evaluations.

The results of the tests are summarized in the following Table 3 with the values for Control Tire A normalized to a value of 100 the respective tests for Control Tire B and Control Tire C simply presented as being comparative to the value of 100 presented for Tire Control A.

A higher value for the indicated rolling resistance, wet handling, dry handling and dry braking in Table 3 represents better tire performance.

**Table 3**

| Amounts of functionalized SBR and resin contained in respective treads | Control Tire A | Control Tire B | Control Tire C |
|---|---|---|---|
| Functionalized SBR (phr) | 0 | 75 | 75 |
| Styrene/alpha methylstyrene resin (phr) | 5 | 0 | 6 |

| Tire Tests | | | |
|---|---|---|---|
| Rolling resistance¹ | 100 | 102 | 101 |
| Wet braking² | 100 | 104 | 109 |
| Wet handling³ | 100 | 103 | 103 |
| Dry handling⁴ | 100 | 104 | 106 |
| Dry braking⁵ | 100 | 102 | 102 |

| | | | |
|---|---|---|---|
| ¹Rolling resistance is a measure of resistance to rolling. A higher number (e.g. 102) means a lower resistance to rolling, as compared to the normalized value of 100 for Control Tire A and therefore a promotion of improved vehicular fuel economy. ²Wet braking is a measure of distance of travel upon braking the vehicle on a wet road surface. A higher number, relative to the normalized value of 100 for Control Tire A means a shorter distance until the associated vehicle stops on the wet road after applying the brakes and therefore a promotion of better traction of the respective tire tread on the wet road. ³Wet handling is a measure of vehicle steering and cornering stability and tire grip for the driving surface for wet surface conditions and while operating under a relatively high speed for the driving conditions. A higher number means better stability and control and therefore a promotion of better grip and cornering stability provided for a tire tread of such rubber composition. ⁴Dry handling is a measure of vehicle steering and cornering stability and tire grip for the driving surface for dry surface conditions and while operating under a relatively high speed for the driving conditions. A higher number means better stability and control and therefore a promotion of better grip and cornering stability provided for a tire tread of such rubber composition. ⁵Dry braking is a measure of distance of travel upon braking the vehicle on a dry road surface. A higher number, relative to the normalized value of 100 for Control Tire A means a shorter distance until the associated vehicle stops on the dry road after applying the brakes and therefore a promotion of better traction of the respective tire tread on the dry road. | | | |

From Table 3 it can be seen that the rolling resistance for Tires B and C, for which the treads contain the styrene/butadiene rubber, including the tread of Control Tire C which contains both the styrene/butadiene rubber and the styrene/alpha methylstyrene resin was improved as compared to Control Tire A. This is considered herein as being significant for improved vehicular fuel economy.

From Table 3 it can be seen that wet braking for Control Tire C, as compared to Control Tires A and B was significantly improved. This is considered herein as being significant because a vehicle with such tires would be expected to be able to stop quicker (a shorter period of time), or over shorter stopping distance, in wet conditions.

It is important to appreciate that the observed improved rolling resistance together with the significant improvement in wet braking is an unexpected combination. This combination of respective properties is unexpected because it is considered herein that it would more conventionally be expected that these properties would be contradictory in that an improvement obtained for one of the properties would be expected to compromise the other property.

From Table 3 it can be seen that wet handling for Control Tire C as compared to Control Tire A is improved. This is considered herein as being significant because it is predictive of improved vehicle steering cornering stability, or control, on wet road conditions.

From Table 3 it can be seen that dry handling for Control Tire C as compared to Control Tires A and B is improved. This is considered herein as being significant because it is predictive of improved vehicle steering cornering stability, or control, on dry road conditions. This is a desirable feature for a high performance tire.

From Table 3 it can be seen that dry braking for Control Tire C as compared to Control Tire A is improved. This is considered herein as being significant because a vehicle with such tires would be expected to be able to stop quicker (a shorter period of time), or over shorter stopping distance, in dry conditions and therefore considered to be an increased safety feature for such tire.

Overall, the balance of the above tire properties is significantly improved for the tire with tread composition C which contains the functionalized styrene/butadiene elastomer, styrene/alpha methylstyrene resin together with the indicated particulate reinforcement of greater than 85 phr of precipitated silica (together with the coupling agent) and about 10 phr of high structure carbon black.

## Claims

1. A tire having at least one component of a rubber composition comprising, based upon 100 parts by weight of elastomer (phr),
(A) 100 phr of elastomers comprised of:
(1) from 60 to 90 phr of a styrene/butadiene elastomer composite (SBR Composite) wherein said SBR Composite is comprised of a styrene/butadiene copolymer elastomer (SBR-1) and a functional styrene/butadiene copolymer elastomer (SBR-2) which contains at least silicon atom within said elastomer with associated pendent hydroxyl and/or alkoxy groups from said silicon atom, as a part of the (SBR-2) elastomer chain to thereby divide said elastomer into at least two segments thereof (SBR-2A and SBR-2B) with the silicon atom of said silanol and/or siloxy group therebetween, wherein said SBR composite is thereby comprised of a polymodal molecular weight configuration comprised 35 to 55 weight percent thereof of said (SBR-1) having a number average molecular weight (Mn) in a range of 200,000 to 300,000 and, correspondingly, 65 to 35 weight percent thereof of said (SBR-2) having a number average molecular weight (Mn) in a range of 400,000 to 550,000; wherein said elastomer contains from zero to a maximum of ten weight percent of at least one additional styrene/butadiene copolymer elastomer (SBR-3) pendent to said silicon atom and having an number average molecular weight (Mn) of greater than 550,000, alternatively between 550,000 and 650,000; and having a styrene content and Tg value in said range for the SBR-1 and SBR-2;
(2) from 10 to 40 phr of at least one additional diene-based elastomer; and
(B) from 35 to 100 phr, alternatively from 81 to 95 phr, of particulate reinforcement comprised of:
(1) from 45 to 100 phr of aggregates of synthetic amorphous precipitated silica which contains hydroxyl groups on its surface, and
(2) from zero to 15 phr, alternatively from 5 to 12 phr, of carbon black **characterized by** having an Iodine absorption value (ASTM D-1510) in a range of from 140 to 180 g/kg together with a dibutylphthalate (DBP) adsorption value (ASTM D-2414) in a range of from 120 to 140 cc/100g, and
(C) from 5 to 12 phr of a styrene/alpha methylstyrene copolymer resin composed of 40 to 70 percent units derived from styrene and, correspondingly, 60 to 30 percent units derived from alpha methylstyrene, and
(D) a coupling agent as:
(1) a coupling agent:
(a) having a moiety reactive with said hydroxyl groups contained on the surface of said silica aggregates and said silanol and/or siloxy groups of said (SBR-2) elastomer, and;
(b) another moiety interactive with said additional diene-based elastomer and said (SBR-1) and (SBR-2) of said (SBR) composite, or
(2) combination of a bis-(3-triethoxysilylpropyl) polysulfide having an average of from 2 to 2.5 connecting sulfur atoms in its polysulfidic bridge and a bis-(3-triethoxysilylpropyl) polysulfide having an average of from 3 to 4 connecting sulfur atoms in its polysulfidic bridge, wherein said polysulfide having an average of from 2 to 2.5 connecting sulfur atoms in its polysulfidic bridge, to the exclusion of such polysulfide having an average of from 3 to 4 connecting sulfur atoms in its polysulfidic bridge, is blended with said rubber composition in the absence of sulfur and sulfur vulcanization accelerator and wherein said polysulfide having an average of from 3 to 4 connecting sulfur atoms in its polysulfidic bridge is thereafter blended with said rubber composition in the presence of sulfur and at least one sulfur vulcanization accelerator.

2. The tire of claim 1, wherein said rubber composition also contains from 1 to 10 phr of a starch/plasticizer composite comprised of starch and plasticizer therefor of a weight ratio in a range of 0.5/1 to 5/1, wherein said starch/plasticizer has a softening point in a range of 110°C to 170°C.

3. The tire of claim 1 or 2, wherein, for said particulate reinforcement for said rubber composition, said amorphous silica is precipitated silica, and said particulate reinforcement is composed of at least 85 phr of said precipitated silica and from zero to a maximum of 15 phr of said rubber reinforcing carbon black, and/or wherein the silica/carbon black weight ratio is at least 8.5/1.

4. The tire of at least one of the preceding claims, wherein said additional diene-based elastomer is cis 1,4-polybutadiene rubber.

5. The tire of at least one of the preceding claims, wherein said coupling agent is an organosulfur silane of the general formula (II):
(II) (R⁴O)₃-Si-R⁵-Sₓ-R⁵-Si-(R⁴O)₃
wherein R⁴ is an ethyl radical, R⁵ is an alkylene radical having from 2 through 4 carbon atoms, and x is a value in a range of 2 to 8, with an average of from 2 to 2.6 or from 3.5 to 4.

6. The tire of at least one of the preceding claims, wherein said (SBR-2) is represented as a substantially linear silicon coupled elastomer of the general formula (IA): 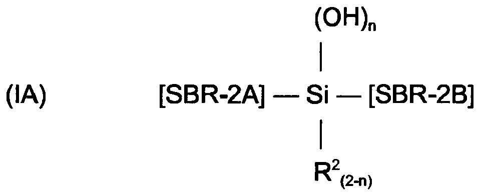 wherein R¹ is an ethyl radical, n is a value in a range of from zero to 2 and R² is a radical selected from isopropyl, t-butyl, phenyl and tolyl radicals; or of the general formula (IB): 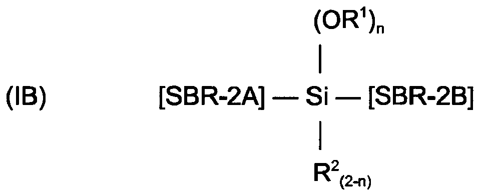 wherein R¹ wherein R¹ is an ethyl radical, n is a value in a range of from zero to 2 and R² is a radical selected from isopropyl, t-butyl, phenyl and tolyl radicals.

7. The tire of at least one of the preceding claims, wherein said amorphous precipitated silica has been prior to blending with said elastomer(s):
(A) pre-treated with an with an alkylsilane of the general Formula (III) prior to blending with said elastomer(s) and said coupling agent;
(B) pre-treated with a coupling agent of formula (II);
(C) pre-treated with an organomercaptosilane of formula (IV), or
(D) pre-treated with a combination of an alkylsilane of Formula (III) with
(1) a coupling agent of the general Formula (II) and/or
(2) an organomercaptosilane of Formula (IV),
wherein said coupling agent of the general formula (II) is represented as:
(II) (R⁴O)₃-Si-R⁵-Sₓ-R⁵-Si-(R⁴O)₃
wherein R⁴ is ethyl radical, R⁵ is an alkylene radical having from 2 through 4 carbon atoms, and x is a value in a range of 2 to 8, with an average of from 2 to 2.6 or from 3.5 to 4;
wherein said alkylsilane of the general Formula (III) is represented as:
(III) Xₙ-Si-R⁶₄₋ₙ
wherein R⁶ is an alkyl radical having from 1 through 4 carbon atoms; n is a value of from 1 through 3; X is a radical selected from the group consisting of chlorine and alkoxy radicals selected from methoxy and ethoxy radicals; and
wherein said organomercaptosilane of the general Formula (IV) is represented as:
(IV) (X)ₙ(R⁷O)₃₋ₙ-Si-R⁸-SH
wherein X is a radical selected from chlorine, bromine and alkyl radicals having from one through 4 carbon atoms, wherein R⁷ is an alkyl radical selected from methyl and ethyl radicals, wherein R⁸ is an alkylene radical having from one through 4 carbon atoms and n is an average value of from zero through 3.

8. The tire of at least any of the preceding claims, wherein said tire component is a tire tread.

9. The tire of at least one of the preceding claims, wherein said tire component is a tire tread wherein said rubber composition is exclusive of any appreciable content of in situ formed alcohol.

## Patentansprüche

1. Reifen mit mindestens einem Bauteil aus einer Kautschukzusammensetzung, umfassend, auf Basis von 100 Gewichtsteilen Elastomer (ThK),
(A) 100 ThK Elastomere, bestehend aus:
(1) 60 bis 90 ThK eines Styrol-Butadien-Elastomer-Verbundwerkstoffes (SBR-Verbundwerkstoff), wobei der SBR-Verbundwerkstoff besteht aus einem Styrol-Butadien-Copolymer-Elastomer (SBR-1) und einem funktionalen Styrol-Butadien-Copolymer-Elastomer (SBR-2), das mindestens Siliziumatom in dem Elastomer mit zugehörigen seitenständig gebundenen Hydroxyl- und/oder Alkoxygruppen von dem Siliziumatom enthält, als Teil der (SBR-2)-Elastomerkette, um dadurch das Elastomer in mindestens zwei Segmente davon (SBR-2A und SBR-2B) zu unterteilen, mit dem Siliziumatom besagter Silanol- und/oder Siloxygruppe dazwischen, wobei der SBR-Verbundwerkstoff dabei aus einer polymodalen Molmassenkonfiguration besteht, zu 35 bis 55 Gewichtsprozent davon bestehend aus dem (SBR-1) mit einer zahlenmittleren Molmasse (Mn) im Bereich von 200.000 bis 300.000 und entsprechend zu 65 bis 35 Gewichtsprozent davon aus dem (SBR-2) mit einer zahlenmittleren Molmasse (Mn) im Bereich von 400.000 bis 550.000; wobei das Elastomer von Null bis zu einem Maximum von zehn Gewichtsprozent mindestens eines zusätzlichen Styrol-Butadien-Copolymer-Elastomers (SBR-3) enthält, das seitenständig an das Siliziumatom gebunden ist und eine zahlenmittlere Molmasse von größer als 550.000, alternativ zwischen 550.000 und 650.000, aufweist; und mit einem Styrolgehalt und Tg-Wert in besagtem Bereich für das SBR-1 und SBR-2;
2) 10 bis 40 ThK mindestens eines zusätzlichen dienbasierten Elastomers; und
(B) 35 bis 100 ThK, alternativ 81 bis 95 ThK, partikelförmige Verstärkung, bestehend aus:
1) 45 bis 100 ThK Aggregaten synthetischen amorphen ausgefällten Silikas, das Hydroxylgruppen an seiner Oberfläche enthält, und
2) Null bis 15 ThK, alternativ 5 bis 12 ThK, Carbon Black, das **dadurch gekennzeichnet ist, dass** es einen lodabsorptionswert (ASTM D-1510) im Bereich von 140 bis 180 g/kg zusammen mit einem Dibutylphthalat(DBP)-Adsorptionswert (ASTM D-2414) im Bereich von 120 bis 140 cm³/100g aufweist, und
(C) 5 bis 12 ThK eines Styrol-Alphamethylstyrol-Copolymerharzes, zusammengesetzt aus 40 bis 70 Prozent von Styrol abgeleiteten Einheiten und entsprechend 60 bis 30 Prozent von Alphamethylstyrol abgeleiteten Einheiten, und
(D) einen Haftvermittler als:
(1) ein Haftvermittler:
(a) mit einem Anteil, der mit den an der Oberfläche der Silikaaggregate enthaltenen Hydroxylgruppen und den Silanol- und/oder Siloxygruppen des (SBR-2)-Elastomers reaktiv ist, und;
(b) einem anderen Anteil, der mit dem zusätzlichen dienbasierten Elastomer und dem (SBR-1) und (SBR-2) des (SBR)-Verbundwerkstoffs in Wechselwirkung tritt, oder
(2) Kombination eines Bis-(3-Triethoxysilylpropyl)polysulfids mit einem Durchschnitt von 2 bis 2,5 verbindenden Schwefelatomen in seiner Polysulfidbrücke und eines Bis-(3-Triethoxysilylpropyl)polysulfids mit einem Durchschnitt von 3 bis 4 verbindenden Schwefelatomen in seiner Polysulfidbrücke, wobei das Polysulfid einen Durchschnitt von 2 bis 2,5 verbindenden Schwefelatomen in seiner Polysulfidbrücke aufweist, unter Ausschluss solchen Polysulfids mit einem Durchschnitt von 3 bis 4 verbindenden Schwefelatomen in seiner Polysulfidbrücke, in Abwesenheit von Schwefel und Schwefelvulkanisationsbeschleuniger mit der Kautschukzusammensetzung vermischt wird, und wobei das Polysulfid mit einem Durchschnitt von 3 bis 4 verbindenden Schwefelatomen in seiner Polysulfidbrücke danach in Gegenwart von Schwefel und mindestens eines Schwefelvulkanisationsbeschleunigers mit der Kautschukzusammensetzung vermischt wird.

2. Reifen nach Anspruch 1, wobei die Kautschukzusammensetzung auch 1 bis 10 ThK eines Stärke-Weichmacher-Verbundwerkstoffs umfasst, bestehend aus Stärke und Weichmacher dafür, mit einem Gewichtsverhältnis im Bereich von 0,5:1 bis 5:1, wobei die Stärke/der Weichmacher einen Erweichungspunkt im Bereich von 110 °C bis 170°C aufweist.

3. Reifen nach Anspruch 1 oder 2, wobei für die partikelförmige Verstärkung für die Kautschukzusammensetzung das amorphe Silika ausgefälltes Silika ist und die partikelförmige Verstärkung aus mindestens 85 ThK des ausgefällten Silikas und von Null bis zu einem Maximum von 15 ThK des Kautschukverstärkungs-Carbon Blacks zusammengesetzt ist, und/oder wobei das Gewichtsverhältnis von Silika zu Carbon Black mindestens 8,5:1 beträgt.

4. Reifen nach mindestens einem der vorgenannten Ansprüche, wobei das zusätzliche dienbasierte Elastomer cis-1,4-Polybutadienkautschuk ist.

5. Reifen nach mindestens einem der vorgenannten Ansprüche, wobei der Haftvermittler ein Organoschwefelsilan ist, mit der allgemeinen Formel (II):
(II) (R⁴O)₃-Si-R⁵-Sₓ-R⁵-Si-(R⁴O)₃
wobei R⁴ ein Ethylradikal ist, R⁵ ein Alkylenradikal mit 2 bis einschließlich 4 Kohlenstoffatomen ist, und x ein Wert im Bereich von 2 bis 8 ist, mit einem Durchschnitt von 2 bis 2,6 oder von 3,5 bis 4.

6. Reifen nach mindestens einem der vorgenannten Ansprüche, wobei das (SBR-2) als im Wesentlichen lineares siliziumgekoppeltes Elastomer dargestellt wird, mit der allgemeinen Formel (IA): 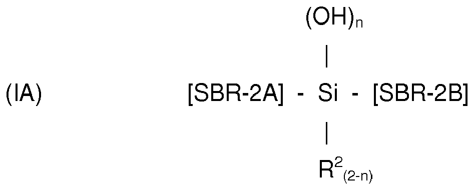 wobei R¹ ein Ethylradikal ist, n ein Wert im Bereich von Null bis 2 ist und R² ein Radikal ist, ausgewählt aus Isopropyl-, t-Butyl-, Phenyl- und Tolylradikalen; oder die allgemeine Formel (IB) aufweist: 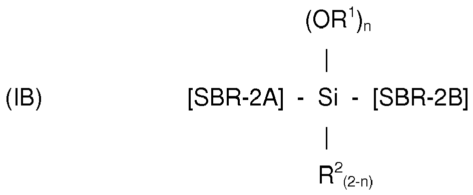 wobei R¹ ein Ethylradikal ist, n ein Wert im Bereich von Null bis 2 ist und R² ein Radikal ist, ausgewählt aus Isopropyl-, t-Butyl-, Phenyl- und Tolylradikalen.

7. Reifen nach mindestens einem der vorgenannten Ansprüche, wobei das amorphe ausgefällte Silika vor dem Vermischen mit dem bzw. den Elastomer(en):
(A) vor dem Vermischen mit dem bzw. den Elastomer(en) und dem Haftvermittler, mit einem Alkylsilan mit der allgemeinen Formel (III) vorbehandelt wurde;
(B) vorbehandelt wurde mit einem Haftvermittler der Formel (II);
(C) vorbehandelt wurde mit einem Organomercaptosilan der Formel (IV), oder
(D) vorbehandelt wurde mit einer Kombination eines Alkylsilans der Formel (III) mit
(1) einem Haftvermittler der allgemeinen Formel (II) und/oder
(2) einem Organomercaptosilan der Formel (IV),
wobei der Haftvermittler der allgemeinen Formel (II) dargestellt wird als:
(II) (R⁴O)₃-Si-R⁵-Sₓ-R⁵-Si-(R⁴O)₃
wobei R⁴ Ethylradikal ist, R⁵ ein Alkylenradikal mit 2 bis einschließlich 4 Kohlenstoffatomen ist, und x ein Wert im Bereich von 2 bis 8 ist, mit einem Durchschnitt von 2 bis 2,6 oder von 3,5 bis 4;
wobei das Alkylsilan der allgemeinen Formel (III) dargestellt wird als:
(III) Xₙ-Si-R⁶₄₋ₙ
wobei R⁶ ein Alkylradikal mit 1 bis einschließlich 4 Kohlenstoffatomen ist; n ein Wert von 1 bis einschließlich 3 ist; X ein Radikal ist, ausgewählt aus der aus Chlor- und Alkoxyradikalen, ausgewählt aus Methoxy- und Ethoxyradikalen, bestehenden Gruppe; und
wobei das Organomercaptosilan der allgemeinen Formel (IV) dargestellt wird als:
(IV) (X)ₙ(R⁷O)₃₋ₙ- Si-R⁸-SH
wobei X ein Radikal ist, ausgewählt aus Chlor-, Brom- und Alkylradikalen mit von einem bis einschließlich 4 Kohlenstoffatomen, wobei R⁷ ein Alkylradikal ist, ausgewählt aus Methyl- und Ethylradikalen, wobei R⁸ ein Alkylenradikal mit ein bis einschließlich 4 Kohlenstoffatomen ist, und n ein Durchschnittswert von Null bis einschließlich 3 ist.

8. Reifen nach mindestens einem der vorgenannten Ansprüche, wobei der Reifenbauteil eine Reifenlauffläche ist.

9. Reifen nach mindestens einem der vorgenannten Ansprüche, wobei der Reifenbauteil eine Reifenlauffläche ist, wobei die Kautschukzusammensetzung unter Ausschluss eines nennenswertes Gehalts an in situ gebildetem Alkohol ist.

## Revendications

1. Bandage pneumatique contenant au moins un composant d'une composition de caoutchouc comprenant, basées sur 100 parties en poids élastomère (phr) :
(A) 100 phr d'élastomères comprenant :
(1) de 60 à 90 phr d'un composite élastomère de styrène/butadiène (composite SBR), ledit composite SBR comprenant un élastomère de copolymère de styrène/butadiène (SBR-1) et un élastomère fonctionnel de copolymère de styrène/butadiène (SBR-2) qui contient au moins un atome de silicium au sein dudit élastomère, avec des groupes hydroxyle et des groupes alcoxy pendants associés émanant dudit atome de silicium comme partie de la chaîne élastomère (SBR-2) pour ainsi subdiviser ledit élastomère en au moins deux segments (SBR-2A et SBR-2B), l'atome de silicium dudit groupe silanol et/ou dudit groupe siloxy étant situé entre les deux, ledit composite SBR possédant ainsi une configuration de poids moléculaire polymodale comprenant de 35 à 55 % en poids dudit (SBR-1) possédant un poids moléculaire moyen en nombre (Mn) dans la plage de 200.000 à 300.000 et de manière correspondante de 65 à 35 % en poids dudit (SBR-2) possédant un poids moléculaire moyen en nombre (Mn) dans la plage de 400.000 à 550.000, ledit élastomère contenant de zéro à un maximum de 10 % en poids d'au moins un élastomère supplémentaire de copolymère de styrène/butadiène SBR-3 pendant audit atome de silicium et possédant un poids moléculaire moyen en nombre (Mn) supérieur à 550.000, en variante entre 550.000 et 650.000, et possédant une teneur en styrène et une valeur Tg dans ladite plage pour le SBR-1 et le SBR-2 ;
(2) de 10 à 40 phr d'au moins un élastomère supplémentaire à base de diène ; et
(B) de 35 à 100 phr, en variante de 81 à 95 phr, d'un renforcement particulaire comprenant :
(1) de 45 à 100 phr d'agrégats de silice précipitée amorphe qui contient des groupes hydroxyle à sa surface ; et
(2) de zéro à 15 phr, en variante de 5 à 12 phr, de noir de carbone **caractérisé par le fait qu'**il possède une valeur d'absorption d'iode (norme ASTM D-1510) dans la plage de 140 à 180 g/kg conjointement avec une valeur d'adsorption du dibutylphtalate (DBP) (norme ASTM D-2414) dans la plage de 120à 140cm³/100g; et
(C) de 5 à 12 phr d'une résine de copolymère de styrène/alphaméthylstyrène 40 à 70 unités en pour cent qui dérivent du styrène et de manière correspondante de 60 à 30 unités en pour cent qui dérivent de l'alphaméthylstyrène ; et
(D) un agent de couplage sous la forme :
(1) d'un agent de couplage:
(a) possédant une fraction apte à réagir avec les groupes hydroxyle contenus à la surface desdits agrégats de silice et desdits groupes silanol et/ou siloxy dudit élastomère (SBR-2) ; et
(b) possédant une autre fraction qui entre en interaction avec ledit élastomère supplémentaire à base diénique et ledit (SBR-1) et ledit (SBR-2) dudit composite (SBR) ; ou
(2) d'une combinaison d'un bis-(3-triéthoxysilylpropyl) polysulfure possédant en moyenne de 2 à 2,5 atomes de soufre de liaison dans son pont polysulfure et d'un bis-(3-triéthoxysilylpropyl) polysulfure possédant en moyenne de 3 à 4 atomes de soufre de liaison dans son pont polysulfure, ledit polysulfure possédant en moyenne de 2 à 2,5 atomes de soufre de liaison dans son pont polysulfure, l'exclusion d'un polysulfure qui possède en moyenne de 3 à 4 atomes de soufre de liaison dans son pont polysulfure, est mélangé avec ladite composition de caoutchouc en l'absence de soufre et d'accélérateur de vulcanisation au soufre, et dans lequel ledit polysulfure possédant en moyenne de 3 à 4 atomes de soufre de liaison dans son pont polysulfure est mélangé par la suite avec ladite composition de caoutchouc en présence de soufre et d'au moins un accélérateur de vulcanisation au soufre.

2. Bandage pneumatique selon la revendication 1, dans lequel ladite composition de caoutchouc contient également de 1 à 10 phr d'un composite amidon/plastifiant comprenant de l'amidon et un plastifiant pour ce dernier, dans un rapport pondéral dans la plage de 0,5/1 à 5/1, ledit composite amidon/plastifiant possédant un point de ramollissement dans la plage de 110 °C à 170 °C.

3. Bandage pneumatique selon la revendication 1 ou 2, dans lequel, pour le renforcement particulaire pour ladite composition de caoutchouc, ladite silice amorphe est une silice précipitée et ledit renforcement particulaire se compose d'au moins 85 phr de ladite silice précipitée, et de zéro à un maximum de 15 phr dudit noir de carbone pour le renforcement du caoutchouc, et/ou dans lequel le rapport pondéral silice/noir de carbone s'élève à au moins 8,5/1.

4. Bandage pneumatique selon au moins une des revendications précédentes, dans lequel ledit élastomère supplémentaire à base diénique est un caoutchouc de 1,4-cis-polybutadiène.

5. Bandage pneumatique selon au moins une des revendications précédentes, dans lequel ledit agent de couplage est un silane contenant un groupe d'organosoufre, répondant à la formule générale (II) :
(II) **(R⁴O)₃ -Si-R⁵-Sₓ-R⁵-Si-(R⁴O)₃**
dans laquelle R⁴ représente un radical éthyle, R⁵ représente un radical alkylène contenant de 2 à 4 atomes de carbone, et x possède une valeur dans la plage de 2 à 8, avec une moyenne de 2 à 2,6 ou de 3,5 à 4.

6. Bandage pneumatique selon au moins une des revendications précédentes, dans lequel ledit (SBR-2) est représenté sous la forme d'un élastomère essentiellement linéaire couplé à un atome de silicium, répondant à la formule générale (IA) : 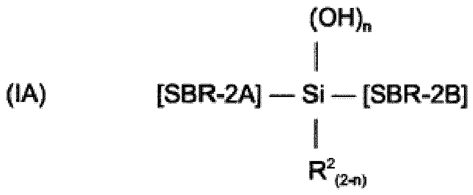 dans laquelle R¹ représente un radical éthyle, n possède une valeur dans la plage de zéro à 2 et R² et un radical choisi parmi un radical isopropyle, un radical tert-butyle, un radical phényle et un radical tolyle ; ou à la formule générale (IB) : 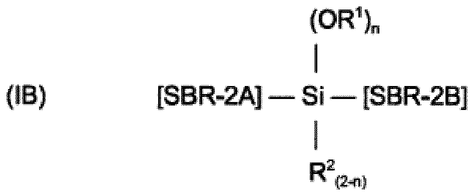 dans laquelle R¹ représente un radical éthyle, n possède une valeur dans la plage de zéro à 2 et R² et un radical choisi parmi un radical isopropyle, un radical tert-butyle, un radical phényle et un radical tolyle.

7. bandage pneumatique selon au moins une des revendications précédentes, dans lequel ladite silice précipitée amorphe a été, avant son mélange avec ledit/lesdits élastomères :
(A) soumise à un traitement préalable avec un alkylsilane répondant à la formule générale (III) avant son mélange avec ledit/lesdits élastomères et ledit agent de couplage ;
(B) soumise à un traitement préalable avec un agent de couplage répondant à la formule (II) ;
(C) soumise à un traitement préalable avec un organomercaptosilane répondant à la formule (IV) ; ou
(D) soumise à un traitement préalable avec une combinaison d'un alkylsilane répondant à la formule (III) avec
(1) un agent de couplage répondant à la formule générale (II) et/ou
(2) un organomercaptosilane répondant à la formule (IV) ;
dans lequel ledit agent de couplage répondant à la formule (II) est représenté par la formule :
(II) **(R⁴O)₃-Si-R⁵-Sₓ-R⁵-Si-(R⁴O)₃**
dans laquelle R⁴ représente un radical éthyle, R⁵ représente un radical alkylène contenant de 2 à 4 atomes de carbone, et x possède une valeur dans la plage de 2 à 8, avec une moyenne de 2 à 2,6 ou de 3,5 à 4;
dans lequel ledit alkylsilane répondant à la formule (III) est représenté par la formule :
(III) **Xₙ-Si-R⁶₄₋ₙ**
dans laquelle R⁶ représente un radical alkyle contenant de 1 à 4 atomes de carbone ; n possède une valeur de 1 à 3 ; X représente un radical choisi parmi le groupe constitué par un radical de chlore et un radical alcoxy choisi parmi un radical méthoxy et un radical éthoxy ; et
dans lequel ledit organomercaptosilane répondant à la formule générale (IV) est représenté par la formule :
(IV) **(X)ₙ(R⁷O)₃₋ₙSi-R⁸-SH**
dans laquelle X représente un radical choisi parmi un radical de chlore, un radical de brome et un radical alkyle contenant de 1 à 4 atomes de carbone ; R⁷ représente un radical alkyle choisi parmi un radical méthyle et radical éthyle ; R⁸ représente un radical alkylène contenant de 1 à 4 atomes de carbone ; et n possède une valeur moyenne de zéro à 3.

8. Bandage pneumatique selon au moins une des revendications précédentes, dans lequel ledit composant de bandage pneumatique est une bande de roulement de bandage pneumatique.

9. Bandage pneumatique selon au moins une des revendications précédentes, dans lequel ledit composant de bandage pneumatique est une bande de roulement de bandage pneumatique, dans lequel ladite composition de caoutchouc exclut une teneur quelconque en alcool formé in situ.
